Europäisches Patentamt

European Patent Office

Office européen des brevets

(19)

(11) Veröffentlichungsnummer: **0 024 050**
**A1**

(12) # EUROPÄISCHE PATENTANMELDUNG

(21) Anmeldenummer: **80104738.2**

(22) Anmeldetag: **11.08.80**

(51) Int. Cl.³: **H 02 G 3/26**
**F 16 L 3/14**

(30) Priorität: **14.08.79 DE 2932936**

(43) Veröffentlichungstag der Anmeldung:
**18.02.81 Patentblatt 81/7**

(84) Benannte Vertragsstaaten:
**AT BE CH DE FR GB IT LI NL SE**

(71) Anmelder: **SIEMENS AKTIENGESELLSCHAFT Berlin
und München
Postfach 22 02 61
D-8000 München 22(DE)**

(72) Erfinder: **Bachel, Ernst
Erlenweg 8
D-8085 Geltendorf(DE)**

(72) Erfinder: **Kunze, Dieter, Dipl.-Ing.
Rosenstrasse 10
D-8021 Neuried(DE)**

(54) **Abfangschelle für schirmlose Kabel.**

(57) Die Kabelschelle besteht aus einer Zugplatte (1), in welche ein das abzufangende Kabel (11) umfassendes Spannband (9) eingehängt wird, und einer Kappe (5-6), die sich, die Zugplatte (1) abdeckend, auf dem Kabel (11) abstützt. Durch Einwirkung einer Mutter (10) auf einem mit der Zugplatte (1) verbundenen Schraubbolzen (4) wird die Zugplatte (1) unter der Kappe (5-6) hochgezogen, wodurch das Spannband (9) mit der nötigen Kraft das Kabel (11) umspannt.

# FIG 4

EP 0 024 050 A1

SIEMENS AKTIENGESELLSCHAFT     Unser Zeichen:
Berlin und München            VPA

                              79 P 6 6 4 5 EUR

Abfangschelle für schirmlose Kabel

Die Erfindung betrifft eine Abfangschelle für die mechanische Abfangung von Kabeln mit Hilfe von Spannbändern und auf den Kabelmantel wirkenden Klemmen.

Für die Abfangung von Kabeln werden meist Klemmvorrichtungen verwendet, die neben der mechanischen Sicherung auch die elektrische Kontaktierung des Kabelschirmes übernehmen. Diese elektrische Kontaktierung ist bei geschirmten Kabeln von großer Wichtigkeit; doch bringt diese Kontaktierung bei der Abfangung der Kabel auch einen zusätzlichen Aufwand. Eine derartige Vorrichtung wird beispielsweise in der DE-AS 20 19 332 beschrieben. Hier wird zunächst der Kabelmantel des abzufangenden Kabels aufgeschlitzt und der hierbei entstehende Lappen wird mit einem Loch versehen. Unter diesen Lappen wird eine Widerlagerplatte eingeführt und mit einem darin befestigten Bolzen durch das eingebrachte Loch gesteckt. Anschließend werden noch zu-

14. Aug. 1979 - Sef 1 Wis

sätzliche Kontaktierungsbleche, Anschlüsse und dgl. zur Verklemmung bzw. Kontaktierung benötigt. Dieser Aufwand ist hierfür gerechtfertigt, nicht aber bei der Abfangung von ungeschirmten Kabeln, da hier das Problem der Kontaktierung entfällt.

Es liegt nun vorliegender Erfindung die Aufgabe zugrunde, eine Kabelabfangung für ungeschirmte Kabel zu schaffen, die mit ihrem Aufwand den Anforderungen für mechanische Abfangung völlig genügt, wobei zu berücksichtigen ist, daß diese Abfangung ohne Zusätze für einen möglichst großen Durchmesserbereich von Kabeln schnell und sicher zu verwenden ist. Die Aufgabe wird nun gemäß der Erfindung dadurch gelöst, daß eine Zugplatte zwei parallel laufende Schlitze entlang paralleler Ränder für den Eingriff eines das Kabel umfassenden Spannbandes und einen dazwischen senkrecht abweisenden Schraubbolzen aufweist, daß eine die Zugplatte allseitig überdeckende und mit einer Bohrung versehene Kappe auf den Schraubbolzen aufgesetzt und mittels einer Mutter als Spannmittel auf dem Kabel aufsitzend fixierbar ist.

Das Wesentliche an der Erfindung ist darin zu sehen, daß diese Kabelabfangung für die reine mechanische Sicherung der Kabel für einen großen Bereich von Kabeldurchmessern eingesetzt werden kann, da mit Hilfe eines Spannbandes und der speziellen Ausformung des Spannelements eine Anpassung an die verschiedenen Durchmesser der Kabel erfolgen kann. Die hierfür geschaffene Abfangschelle besteht aus einer Zugplatte, in der das Spannband eingehängt wird und aus einem Druckteil, das als Kappe auf einen Schraubbolzen der Zugplatte gesetzt wird. Durch das Anpressen der Kappe mittels einer Mutter stützt sich diese Kappe auf dem Kabelmantel ab und gleichzeitig wird, da das Spannband durch Umbiegen gesichert ist, hierdurch die Zugplatte unter der Kappe hochgezogen, so daß die benötigte Spannung auf das den Kabelmantel umfassende Spannband erzeugt wird. Die Kappe weist an den Rändern der
umgebogenen Seitenteile V-förmige Ausschnitte auf, in
denen die Kabel, gleichgültig mit welchem Durchmesser,
immer gut fixiert sind. Das weitere Anpassen auf den
entsprechenden Durchmesser erfolgt in einfachster Weise
durch die Wahl der Länge des einzuziehenden Spannbandes.

Die Erfindung wird nun an einem Ausführungsbeispiel,
das in vier Figuren dargestellt wird, näher erläutert.

Fig. 1 zeigt die Zugplatte zum Einziehen des Spannbandes,

Fig. 2 zeigt das dazugehörige Druckteil in Form einer
     Kappe,

Fig. 3 zeigt die erste Phase der Montage,

Fig. 4 zeigt die fertig montierte Abfangschelle.

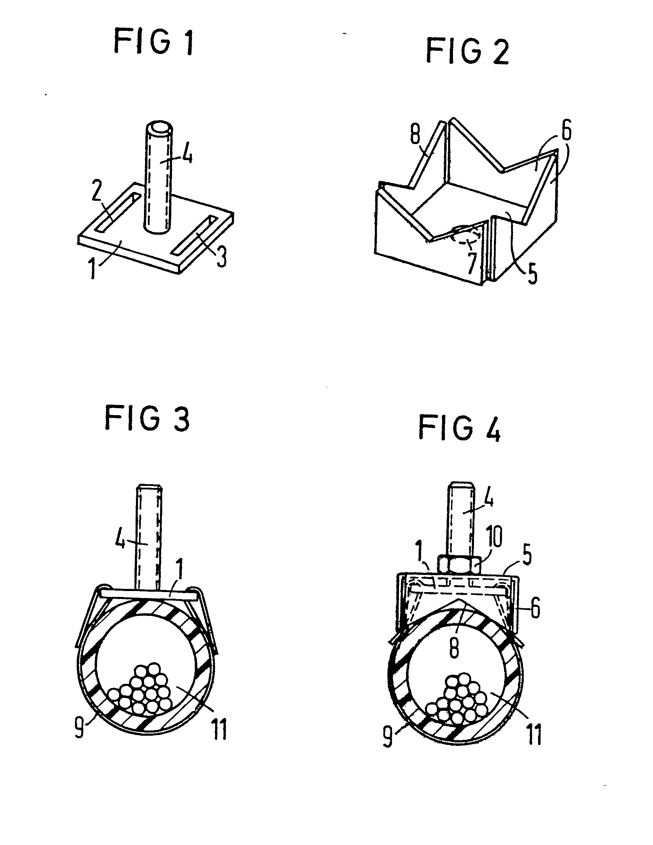

In der Fig. 1 wird die Zugplatte 1 dargestellt, die an
zwei parallel verlaufenden Rändern jeweils einen Schlitz 2
bzw. 3 aufweist. Diese Schlitze 2 bzw. 3 haben solche
Ausmaße, daß durch sie ein für diese Zwecke geläufiges
Spannband, z.B. ein Ligarex-Band, einzuziehen ist.
Weiterhin ist dazwischenliegend und senkrecht abstehend ein Schraubbolzen 4 fest angebracht.

In Fig. 2 ist nun das dazugehörige Druckteil in Form
einer Kappe 5-6 dargestellt. Die Seitenteile 6 sind
vom Deckteil 5 allseitig in eine Richtung abgewinkelt, so daß sich hierdurch die Form einer Kappe 5-6 ergibt.
Im Deckteil 5 ist eine Bohrung 7 angebracht, in welche
bei der Montage der Schraubbolzen 4 eingeführt wird.
Die Seitenteile 6 sind weiterhin an ihren Rändern mit
V-förmigen Ausschnitten 8 versehen. Durch diese Ausschnitte 8 wird gewährleistet, daß die Kabel unabhängig
vom Durchmesser immer gut in ihrer Lage fixiert werden.

Aus Fig. 3 geht bereits die Vormontage auf dem Kabel 11
hervor. In einem Schlitz, z.B. 2 der Zugplatte 1 wurde
zunächst das Spannband 9 eingezogen und nach außen umgebogen, dann wurde das Spannband 9 um das abzufangende
Kabel 11 geführt und in den zweiten Schlitz 3 der Zugplatte 1 eingezogen und ebenfalls nach außen umgebogen.

In Fig. 4 ist bereits die Kappe 5-6 auf den Schraubbolzen 4 aufgesetzt und mittels der Mutter 10 nach unten
gepreßt. Dabei stützt sich die Kappe 5-6 auf dem Kabelmantel des Kabels 11 ab, da das Spannband selbsthemmend
fixiert ist. Das Kabel 11 zieht sich dabei in die
V-förmigen Ausschnitte 8 der Kappe 5-6. Durch das Eindrehen der Mutter 10 wird jedoch die Zugplatte 1 unter
der Kappe 5-6 nach oben gezogen, so daß das Spannband
mit entsprechender Kraft auf den Kabelmantel aufgepreßt wird. Hierdurch wird das Kabel 11 mechanisch gefaßt. Durch die Abstützung der Seitenteile 6 der
Kappe 5-6 wird außerdem verhindert, daß sich gewissermaßen durch Selbsthemmung das Spannband infolge der zunehmenden Kräfte wieder herauszieht. Der weiterhin
noch abstehende Schraubbolzen 4 kann nun in entsprechenden Vorrichtungen zum Abfangen von Druck- und
Zugkräften in einer Kabelmuffe oder ähnlichem festgelegt
werden, womit dann das gefaßte Kabel ebenfalls festgelegt
ist.

2 Patentansprüche

4 Figuren

0024050

<u>Patentansprüche</u>

1. Abfangschelle für die mechanische Abfangung von Kabeln mit Hilfe von Spannbändern und auf den Kabelmantel wirkenden Klemmen, d a d u r c h g e k e n n z e i c h n e t , daß eine Zugplatte (1) zwei parallellaufende Schlitze (2, 3) entlang paralleler Ränder für den Eingriff eines das Kabel umfassenden Spannbandes (9) und einen dazwischen senkrecht abweisenden Schraubbolzen (4) aufweist, daß eine die Zugplatte (1) allseitig überdeckende und mit einer Bohrung (7) versehene Kappe (5-6) auf den Schraubbolzen (4) aufgesetzt und mittels einer Mutter (10) als Spannmittel auf dem Kabel (11) aufsitzend fixierbar ist.

2. Abfangschelle nach Anspruch 1, d a d u r c h g e k e n n z e i c h n e t , daß die abgewinkelten Seitenteile (6) der Kappe (5-6) an den Enden V-förmige Ausschnitte (8) aufweisen.

## FIG 1

2
1
3
4

## FIG 2

8
6
7
5

## FIG 3

4
4
1
9
11

## FIG 4

4
1
10
5
6
8
9
11

| | Europäischer Patentamt | EUROPÄISCHER RECHERCHENBERICHT | Nummer der Anmeldung EP 80 10 4738 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - E - 54 012</u> (BUSSON)<br> * Seite 6, Zeilen 62-67; Figur 12 * | 1,2 |
| | -- | |
| | <u>DE - A - 2 734 789</u> (TOMASINA)<br> * Seite 5; Absätze 6-8; Seite 6, Absätze 1,2,5; Seite 7, Absatz 1; Figuren 1,2 * | 1,2 |
| | -- | |
| | <u>US - A - 2 158 802</u> (REDLON)<br> * Seite 1, linke Spalte, Zeile 25 bis rechte Spalte, Zeile 49; Figuren 3,4 * | 1,2 |
| | ---- | |

**KLASSIFIKATION DER ANMELDUNG (Int. Cl.)**

H 02 G 3/26
F 16 L 3/14

**RECHERCHIERTE SACHGEBIETE (Int. Cl.)**

H 02 G 3/26
        3/24
F 16 L 3/12
        3/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-11-1980 | TIELEMANS |

EPA form 1503 1  06.78